# EUROPÄISCHE PATENTSCHRIFT

(11) **EP 3 744 755 B1**
(45) Veröffentlichungstag und Bekanntmachung des Hinweises auf die Patenterteilung: **09.10.2024**
(21) Anmeldenummer: 19176872.0
(22) Anmeldetag: 28.05.2019
(51) Int. Cl.: C08G 77/14, C08G 77/04, C08L 83/06, C08G 77/08, C08G 77/10

(54) **VERFAHREN ZUR HERSTELLUNG ACETOXYGRUPPEN-TRAGENDER SILOXANE**
METHOD FOR PRODUCING SILOXANES BEARING ACETOXY GROUPS
PROCÉDÉ DE PRODUCTION DE SILOXANES PORTANT DES GROUPES ACÉTOXY

(43) Veröffentlichungstag der Anmeldung: 02.12.2020
(73) Patentinhaber: Evonik Operations GmbH, 45128 Essen (DE)
(72) Erfinder: KNOTT, Wilfried, 45355 Essen (DE); DUDZIK, Horst, 45326 Essen (DE); HENNING, Frauke, 42529 Essen (DE); CASSENS, Jan, 45711 Datteln (DE)
(74) Vertreter: Evonik Patent Association

(56) Entgegenhaltungen:
- CA-A- 1 125 780
- CN-A- 105 885 051
- US-A- 4 066 680

## Beschreibung

Die vorliegende Erfindung betrifft ein Verfahren zur Herstellung supersaurer, insbesondere trifluormethansulfonsaurer, endäquilibrierter, Acetoxygruppen-tragender Siloxane, Als reaktive Ausgangsmaterialien zur Herstellung von SiOC-basierten Silikonderivaten, insbesondere von SiOC-basierten Polyethersiloxanen stellen Acetoxygruppen-tragende Siloxane linearen beziehungsweise verzweigten Strukturtyps bedeutsame Verbindungsklassen dar.

EP3492513 A1 und EP3467006 A1 widmen sich der Herstellung SiOC-verknüpfter Polyethersiloxane, wobei als reaktive Zwischenstufen trifluormethansulfonsaure, äquilibrierte Acetoxysiloxane des linearen beziehungsweise auch des verzweigten Strukturtyps verwendet werden.

Die in diesen Schriften aufgeführten Herstellweisen der dort verwendeten Acetoxysiloxane näher untersuchend, haben die Erfinder gefunden, dass die trifluormethansulfonsauren Acetoxysiloxane unmittelbar nach ihrer Herstellung noch größere Anteile an Siloxancyclen aufweisen (siehe hierzu Beispiele 3 und 6 der vorliegenden Erfindung), die sich allerdings bei Lagerung der Siloxane bei 23°C im Verlauf von ca. 2 bis 3 Wochen so in die jeweilige Siloxanmatrix einbauen, dass der Gehalt verbleibender Siloxancyclen (D₄ + D₅ + D₆) dem sich bei dieser Temperatur und einem Druck von 1013,25 hPa einstellenden Endgleichgewicht entspricht.

Die dabei resultierenden trifluormethansulfonsauren, äquilibrierten Acetoxysiloxane genügen demnach allen Qualitätserfordernissen, die man an diese reaktiven Zwischenprodukte stellen kann. Allerdings bleibt es wünschenswert, eine verbesserte Kinetik der Gleichgewichtseinstellung zu erzielen, um eine unmittelbare Weiterverarbeitung der Zwischenstufen zu gewährleisten.

US4066680A offenbart ein Verfahren zur Herstellung von α,ω-Siloxanedioien aus α,ω-Diacetoxysiloxanen als Zwischenprodukt. Die α,ω-Diacetoxysiloxane werden durch Reaktion cyclischer Siloxane, Acetatanhydrid, Essigsäure und saurer Bleicherde unter Rückfluss hergestellt.

Die Aufgabe vorliegender Erfindung liegt vor diesem Hintergrund darin, ein Verfahren zur Herstellung endäquilibrierter Acetoxyfunktionen aufweisender Siloxane zu finden, das die Kinetik der Gleichgewichtseinstellung so vorteilhaft beschleunigt, dass man bereits zum Ende des Herstellprozesses unmittelbar weiterverarbeitbare Reaktivsiloxane isoliert.

Überraschenderweise wurde nun im Rahmen der vorliegenden Erfindung gefunden, dass man in vorteilhafter Weise zu endäquilibrierten Acetoxysiloxanen linearen als auch verzweigten Strukturtyps gelangen kann, indem man die in den Patentanmeldungen EP3492513 A1 und EP3467006 A1 beschriebenen Umsetzungen insbesondere unter Hinzufügen von Essigsäure ausführt.

Gegenstand der vorliegenden Erfindung ist ein Verfahren zur Herstellung supersaurer, insbesondere trifluormethansulfonsaurer, endäquilibrierter, Acetoxygruppen-tragender Siloxane, bei welchem man zyklische Siloxane, insbesondere umfassend D₄ und/ oder D₅, und/ oder Mischungen zyklisch-verzweigter Siloxane vom D/T-Typ, gegebenenfalls in Abmlschung mit Hydroxygruppen tragenden biloxanen und/oder Acetoxy- und/oder Alkoxygruppen-tragenden Silanen und/oder Siloxanen,
unter Einsatz von Supersäure, insbesondere Trifluormethansulfonsäure als Katalysator mit Acetanhydrid und unter Zusatz von Essigsäure umsetzt,
wobei es sich bei den eingesetzten zyklischen-verzweigten Siloxanen vom D/T-Typ um Mischungen zyklischer-verzweigter Siloxane vom D/T-Typ handelt, die neben D- und T-Einheiten aufweisenden Siloxanen ggf. auch Siloxane mit Q-Einheiten enthalten, mit der Maßgabe, dass bei diesen Mischungen der Anteil an Si-Atomen stammend aus Q-Einheiten ≤ 10 Massen-% bis ≥ 0 Massenprozent-% ausmacht, bevorzugt ≤ 5 Massen-% bis ≥ 0 Massenprozent-%, wobei die Untergrenze > 0 oder = 0 Massenprozent-% sein kann, insbesondere aber = 0 Massenprozent-% ist, jeweils bezogen auf die Gesamtheit aller Si-Atome,
mit der Maßgabe, dass für den Fall, dass keine Mischungen zyklischer-verzweigter Siloxane vom D/T-Typ eingesetzt werden, die Siloxane mit Q-Einheiten enthalten, die eingesetzte Säuren nicht allein Trifluormethansulfonsäure und Essigsäure sind.

In einer bevorzugten Ausführungsform des erfindungsgemäßen Verfahrens sind der alleinige Einsatz von Trifluormethansulfonsäure sowie der alleinige Einsatz von Trifluormethansulfonsäure und Essigsäure als Säuren ausgenommen.

Hinsichtlich der Verwendbarkeit von DT-Zyklen haben die Erfinder festgestellt, dass sich sowohl Mischungen zyklischer-verzweigter Siloxane vom D/T-Typ, die (insbesondere ausschließlich) aus D- und T-Einheiten aufweisenden Siloxanen bestehen und deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, kleiner 2 Molprozent, bevorzugt kleiner 1 Molprozent ist, und dass sie des Weiteren vorteilhafterweise zumindest 5 Gew.-% Siloxancyclen, wie vorzugsweise Oktamethylcyclotetrasiloxan (D₄), Dekamethylcyclopentasiloxan (D₅) und/oder deren Mischungen enthalten,
als auch
Mischungen zyklischer-verzweigter, (insbesondere ausschließlich) D- und T-Einheiten aufweisender Siloxane deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind,
besonders gut für den erfindungsgemäßen Einsatz eignen.

Die erfindungsgemäß einsetzbaren zyklisch-verzweigten Siloxane vom D/T-Typ sind sowohl im experimentellen Teil beispielhaft beschrieben als auch in der europäischen Patentanmeldung EP3321304A1 als auch in der Patentanmeldung EP3401353A1 detailliert beschrieben. Die Bereitstellung von Mischungen zyklischer-verzweigter Siloxane vom D/T-Typ, die neben D- und T-Einheiten aufweisenden Siloxanen auch solche mit Q-Einheiten enthalten, ist dem Fachmann beispielsweise in Analogie zur Lehre der beiden genannten Schriften unter Verwendung von zum Beispiel Q-Einheiten liefernden Kieselsäureestern (Si(OR)₄) ohne Weiteres möglich.

Gemäß der Erfindung sind die erfindungsgemäß neben der Essigsäure eingesetzten Säuren Supersäuren. Supersäuren sind dem Fachmann wohlbekannt, es handelt sich hierbei im Allgemeinen um Säuren, die stärker als konzentrierte 100-prozentige Schwefelsäure (H₂SO₄: pKₛ-Wert = -3,0) sind. Zur Quantifizierung der Säurestärke wird im Allgemeinen die Hammettsche Aciditätsfunktion verwendet. Gemäß einer weiteren bevorzugten Ausführungsform der Erfindung sind die eingesetzten Säuren demnach Supersäuren, die einen pKa-Wert kleiner -3,0 aufweisen, vorzugsweise fluorierte und/ oder perfluorierte Sulfonsäuren, Fluorsulfonsäure HSO₃F, Fluor-Antimonsäure HSbF₆, Perfluorbutansulfonsäure C₄F₉SO₃H und ganz besonders bevorzugt Trifluormethansulfonsäure CF₃SO₃H umfasst.

Gemäß einer bevorzugten Ausführungsform der Erfindung werden in dem erfindungsgemäßen Verfahren Acetoxygruppen tragende Silane eingesetzt, insbesondere Diacetoxydimethylsilan und/oder Triacetoxymethylsilan.

Gemäß einer weiteren bevorzugten Ausführungsform der Erfindung werden in dem erfindungsgemäßen Verfahren Alkoxygruppen tragende Silane eingesetzt, insbesondere Triethoxy- und/ oder Trimethoxy- und/ oder Diethoxy- und/ oder Triethoxysilan und / oder Kieselsäureester (Si(OR)₄), bevorzugt mit R = Methyl oder Ethyl.

Um zu den Mischungen zyklischer-verzweigter, (insbesondere ausschließlich) D- und T-Einheiten aufweisender Siloxane deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind, zu gelangen, eignet sich insbesondere ein Verfahren umfassend die Schritte
(a) eine sauer katalysierte Äquilibrierung von Trialkoxysilanen mit Siloxancyclen und/oder α,ω- Dihydroxy-polydimethylsiloxan in Anwesenheit von mindestens einem sauren Katalysator und danach
(b) eine durch Wasserzugabe eingeleitete Hydrolyse- und Kondensationsreaktion sowie Zugabe eines Silicium-haltigen Lösemittels, gefolgt von,
(c) einer destillativen Abtrennung des freigesetzten Alkohols, im System vorhandenen Wassers und Silicum-haltigen Lösemittels sowie einer Neutralisation oder Abtrennung des sauren Katalysators und ggf. Abtrennung womöglich gebildeter Salze,
wobei das Silicium-haltige Lösungsmittel vorzugsweise die isomeren Siloxancyclen Oktamethylcyclotetrasiloxan (D₄), Dekamethylcyclotetrasiloxan (D₅) und/oder deren Mischungen umfasst, und vorteilhafterweise in Massenverhältnissen von Silicium-haltigem Lösemittel zum D- und T-Einheiten aufweisenden Siloxan von 1:1 bis 5:1 gearbeitet wird, wie in der in der Patentanmeldung EP3401353A1 beschrieben.

Für die Zwecke der Ausführbarkeit sei hier beispielhaft die Herstellung dieser vorgenannten Mischungen zyklischer-verzweigter, (insbesondere ausschließlich) D- und T-Einheiten aufweisender Siloxan gezeigt: In einem 500-ml-Vierhalsrundkolben mit KPG-Rührer und aufgesetztem Rückflusskühler werden 52,2 g (0,293mol) Methyltriethoxysilan zusammen mit 130,3 g (0,351 mol) Dekamethylcyclopentasiloxan unter Rühren auf 60°C erwärmt, mit 0,400 gTrifluormethansulfonsäure beaufschlagt und für 4 Stunden äquilibriert. Dann werden 15,8 g Wasser sowie 4,0 g Ethanol hinzugefügt und der Ansatz wird für weitere 4 Stunden auf Rückflusstemperatur (ca. 80°C) erhitzt. Man fügt 10,6 g Wasser sowie 200 ml Dekamethyl-cyclopentasiloxan (D5) hinzu und tauscht den Rückflusskühler gegen eine Destillationsbrücke aus und destilliert innerhalb der folgenden Stunde die bis 90°C flüchtigen Bestandteile ab. Man belässt den Reaktionsansatz für weitere 2 Stunden bei 90°C, lässt dann auf 50°C abkühlen und fügt 5 ml einer 25%igen, wässrigen Ammoniaklösung hinzu und rührt zur vollständigen Neutralisation noch eine weitere Stunde nach. Bei 100°C und einem angelegten Hilfsvakuum von < 1mbar werden Wasser und das als Lösungsmittel eingesetzte Dekamethylcyclopentasiloxan (D₅) abdestilliert. Nach Erkalten des Destillationssumpfes wird mit Hilfe eines Faltenfilters das ausgefallene Ammoniumtriflat abgetrennt. Das Filtrat ist eine farblose, leichtbewegliche Flüssigkeit deren ²⁹Si-NMRSpektrum ein D-/T-Verhältnis von 6,1 : 1 (angestrebt 6,0 : 1) zuweist. Bezogen auf die Summe der spektroskopisch erfassten Si-Einheiten kommt den D- und T-Einheiten, die Si-Alkoxy- beziehungsweise SiOH-Gruppen tragen, ein Anteil von 4,1 Molprozent zu.

Um zu den Mischungen zyklischer-verzweigter Siloxane vom D/T-Typ, die (insbesondere ausschließlich) aus D- und T-Einheiten aufweisenden Siloxanen bestehen und deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, ≤ 2 Molprozent, bevorzugt kleiner 1 Molprozent ist, und dass sie des Weiteren vorteilhafterweise zumindest 5 Gew.-% Siloxancyclen, wie vorzugsweise Oktamethylcyclotetrasiloxan (D₄), Dekamethylcyclopentasiloxan (D₅) und/oder deren Mischungen enthalten, zu gelangen, eignet sich insbesondere ein Verfahren, in welchem ein Trialkoxysilan in einem Lösemittel mit Siloxancyclen und/oder α,ω-Dihydroxy-polydimethylsiloxan unter Zugabe von Wasser und in Anwesenheit von mindestens einem sauren Katalysator umgesetzt wird, wie in der europäischen Patentanmeldung EP3321304A1 beschrieben. Das Beispiel 1 der vorliegenden Erfindung zeigt beispielhaft die Darstellung entsprechender Mischungen zyklischer-verzweigter Siloxane vom D/T-Typ.

Gemäß einer bevorzugten Ausführungsform der Erfindung setzt man Essigsäure in Mengen von 0,4 bis 3,5 Gewichtsprozent, vorzugsweise 0,5 bis 3 Gewichtsprozent, bevorzugt 0,8 bis 1,8 Gewichtsprozent, besonders bevorzugt in Mengen von 1,0 bis 1,5 Gewichtsprozent bezogen auf die Reaktionsmatrix umfassend (insbesondere bestehend aus) Acetanhydrid und zyklischen Siloxanen, umfassend D₄ und/oder D₅, beziehungsweise umfassend (insbesondere bestehend aus) Acetanhydrid, und Mischungen zyklisch-verzweigter Siloxanen vom D/T-Typ, beziehungsweise umfassend (insbesondere bestehend aus) zyklischen Siloxanen, umfassend D₄ und/oder D₅, und Mischungen zyklisch-verzweigter Siloxanen vom D/T-Typ, hinzu.

Die als Katalysator neben der Essigsäure eingesetzte Supersäure, insbesondere Trifluormethansulfonsäure wird gemäß einer bevorzugten Ausführungsform der Erfindung in Mengen von 0,1 bis 1,0 Massenprozent, bevorzugt 0,1 bis 0,3 Massenprozent, bezogen auf die Acetanhydrid und zyklischen Siloxanen, insbesondere umfassend D₄ und/oder D₅, und/oder zyklischen-verzweigten Siloxanen vom D/T-Typ umfassende (insbesondere daraus bestehende) Reaktionsmatrix, eingesetzt.

Mit dem Begriff "endäquilibriert" ist gemeint, dass das Äquilibriergleichgewicht erreicht worden, das sich bei einer Temperatur von 23°C und einem Druck von 1013,25 hPa einstellt. Als Indikator für das Erreichen des Äquilibriergleichgewichtes kann der gaschromatographisch bestimmte Gesamtcyclengehalt definiert als die Summe der D₄-, D₅-, D₆-Gehalte bezogen auf die Siloxanmatrix und festgestellt nach der Derivatisierung der α,ω-Diacetoxypolydimethylsiloxane zu den entsprechenden α,ω-Diisopropoxypolydimethylsiloxanen beziehungsweise nach der Derivatisierung der verzweigten Acetoxysiloxane zu den entsprechenden verzweigten Isopropoxysiloxanen herangezogen werden. Der erfindungsgemäße Einsatz der Essigsäure ermöglicht hier die problemlose Unterschreitung sonst üblicher Gleichgewichtsanteile von etwa 13 Gewichtsprozent des Gesamtcyclengehaltes bei den linearen α,ω-Diacetoxypolydimethylsiloxanen und von etwa 8 Gewichtsprozent des Gesamtcyclengehaltes bei den verzweigten Acetoxysiloxanen. Demzufolge entspricht es einer bevorzugten Ausführungsform wenn Gleichgewichtsanteile des Gesamtcyclengehaltes von kleiner 13, vorzugsweise kleiner 12 Gewichtsprozent bei den linearen α,ω-Diacetoxypolydimethylsiloxanen, und Gleichgewichtsanteile des Gesamtcyclengehaltes von kleiner 8, vorzugsweise kleiner 7 Gewichtsprozent bei den verzweigten Acetoxysiloxanen unterschritten werden. Die Derivatisierung zu den α,ω-Diisopropoxypolydimethylsiloxanen beziehungsweise zu den verzweigten Isopropoxysiloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxypolydimethylsiloxane beziehungsweise der verzweigten Acetoxysiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Gemäß einer bevorzugten Ausführungsform führt man die Umsetzung im Temperaturbereich von 140 bis 160°C und in einem Zeitraum von 4 bis 8 Stunden durch.

Ein weiterer Gegenstand der vorliegenden Erfindung betrifft supersaure, insbesondere trifluormethansulfonsaure, endäquilibrierte lineare α,ω-Acetoxygruppen-tragende Siloxane, welche Gesamtcyclengehalte, definiert als Summe der Gehaltsanteile der zyklischen Siloxane umfassend D₄ , D₅ und D₆ bezogen auf die Siloxanmatrix und gaschromatographisch ermittelt nach deren Derivatisierung zu den entsprechenden linearen α,ω-Isopropoxysiloxanen von kleiner 13, vorzugsweise kleiner 12 Gewichtsprozent aufweisen, hergestellt nach einem erfindungsgemäßen Verfahren wie zuvor beschrieben.

Ein weiterer Gegenstand der vorliegenden Erfindung betrifft supersaure, insbesondere trifluormethansulfonsaure, endäquilibrierte verzweigte Acetoxygruppen-tragende Siloxane, welche Gesamtcyclengehalte, definiert als Summe der Gehaltsanteile der zyklischen Siloxane umfassend D₄ , D₅ und D₆ bezogen auf die Siloxanmatrix und gaschromatographisch ermittelt nach deren Derivatisierung zu den entsprechenden verzweigten Isopropoxysiloxanen von kleiner 8, vorzugsweise kleiner 7 Gewichtsprozent aufweisen, hergestellt nach einem erfindungsgemäßen Verfahren wie zuvor beschrieben.

Ein weiterer Gegenstand der vorliegenden Erfindung betrifft die Verwendung der endäquilibrierten supersauren, insbesondere trifluormethansulfonsauren Acetoxygruppen-tragenden Siloxane, wie zuvor beschrieben, als Ausgangsmaterialien für die Herstellung von SiOC-verknüpften Polyethersiloxanen für deren Einsatz in PU-Schaumstabilisatoren, in Entschäumern, in Dismulgatoren, in Emulgatoren und in Lack- und Verlaufsadditiven; sowie für deren Einsatz als Entlüfter; als Schaumstabilisator, insbesondere als Polyurethanschaumstabilisator; als Netzmittel; als Hydrophobierungsmittel; als Verlaufsmittel; zur Herstellung von Polymerdispersionen; zur Herstellung von Klebstoffen oder Dichtstoffen; zur Oberflächenbehandlung von Fasern, Partikeln oder Flächengebilden, insbesondere zur Ausrüstung oder Imprägnierung von Textilien, zur Herstellung von Papiertüchern, bei der Beschichtung von Füllstoffen; zur Herstellung von Reinigungs- und Pflegeformulierungen für den Haushalt oder für industrielle Anwendungen, insbesondere zur Herstellung von Weichspülmitteln; zur Herstellung von kosmetischen, pharmazeutischen und dermatologischen Zusammensetzungen, insbesondere kosmetischen Reinigungs- und Pflegeformulierungen, Haarbehandlungsmitteln und Haarnachbehandlungsmitteln; zur Reinigung und Pflege von harten Oberflächen; als Prozesshilfsmittel bei der Extrusion von Thermoplasten; zur Herstellung von thermoplastischen Formkörpern und/oder als Adjuvant im Pflanzenschutz; zur Herstellung von Baustoffzusammensetzungen.

### Beispiele

Die folgenden Beispiele dienen dem Fachmann allein zur Erläuterung dieser Erfindung und stellen keinerlei Beschränkung des beanspruchten Gegenstandes dar. Die Bestimmung der Wassergehalte erfolgt grundsätzlich mit der Karl-Fischer-Methode in Anlehnung an DIN 51777, DGF E-III 10 und DGF C-III 13a. Die ²⁹Si-NMR-Spektroskopie diente in allen Beispielen der Reaktionsverfolgung.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [δ(²⁹Si) = 0,0 ppm] gemessen.

Die GPC's (Gel-Permeations-Chromatographie) werden unter Verwendung von THF als mobiler Phase an einer Säulenkombination SDV 1000/10000A, Länge 65 cm, ID 0,80 bei einer Temperatur von 30°C an einem SECcurity² GPC System 1260 (PSS Polymer Standards Service GmbH) aufgenommen.

Die Gaschromatogramme werden an einem GC-Gerät des Typs GC 7890B der Fa. Agilent Technologies
ausgestattet mit einer Säule vom Typ HP-1; 30m x 0,32mm ID x 0,25µm dF (Agilent Technologies Nr. 19091Z-413E) und Wasserstoff als Trägergas mit folgenden Parametern aufgenommen: Detektor: FID; 310°C
Injektor: Split; 290°C
Mode: constant flow 2 mL/min
Temperaturprogramm: 60°C mit 8°C/min -150°C mit 40°C/min - 300°C 10 min.

Als Indikator für das Erreichen des Äquilibriergleichgewichtes wird der gaschromatographisch bestimmte Gesamtcylengehalt definiert als die Summe der D₄-, D₅-, D₆-Gehalte bezogen auf die Siloxanmatrix und festgestellt nach der Derivatisierung der α,ω-Diacetoxypolydimethylsiloxane zu den entsprechenden α,ω-Diisopropoxypolydimethylsiloxanen herangezogen. Die Derivatisierung zu den α,ω-Diisopropoxypolydimethylsiloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxy-polydimethylsiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

### Beispiel 1

Herstellung eines zyklisch-verzweigten Siloxans mit einem angestrebten D-/ T-Verhältnis von 6 : 1 In einem 10-I-Vierhalsrundkolben mit KPG-Rührer und aufgesetztem Rückflusskühler werden 783 g (4,39 mol) Methyltriethoxysilan zusammen mit 978,7 g (2,64 mol) Dekamethylcyclopentasiloxan unter Rühren auf 60°C erwärmt, mit 2,98 g Trifluormethansulfonsäure beaufschlagt und für 4 Stunden äquilibriert. Dann werden 237 g Wasser sowie 59,3 g Ethanol hinzugefügt und der Ansatz wird für weitere 2 Stunden auf Rückflusstemperatur erhitzt. Man fügt 159,0 g Wasser sowie 978,8 g (2,64 mol) Dekamethylcyclopentasiloxan (D₅) hinzu und tauscht den Rückflusskühler gegen eine Destillationsbrücke aus und destilliert innerhalb der folgenden Stunde die bis 90°C flüchtigen Bestandteile ab. Man fügt dann dem Reaktionsansatz 3000 ml Toluol hinzu und destilliert bis zu einer Sumpftemperatur von 100°C am Wasserabscheider das noch im Stoffsystem befindliche Wasser ab. Man lässt den Reaktionsansatz auf etwa 60°C abkühlen, neutralisiert die Säure durch Zugabe von 60,0 g festen Natriumhydrogencarbonats und rührt dann zur vollständigen Neutralisation noch weitere 30 Minuten nach. Nach Abkühlen auf 25°C werden mit Hilfe eines Faltenfilters die Salze abgetrennt.

Bei 70°C und einem angelegten Hilfsvakuum von < 1mbar wird das als Lösungsmittel eingesetzte Toluol abdestilliert. Der Destillationssumpf ist eine farblose, leichtbewegliche Flüssigkeit deren ²⁹Si-NMR-Spektrum ein D-/T-Verhältnis von 6,2 : 1 (angestrebt 6,0 : 1) zuweist. Bezogen auf die Summe der spektroskopisch erfassten Si-Einheiten kommt den D- und T-Einheiten, die Si-Alkoxybeziehungsweise SiOH-Gruppen tragen, ein Anteil von 0,52 Molprozent zu. Die gaschromatographische Analyse der Flüssigkeit weist außerdem einen Anteil von ca. 15 Gewichtsprozent an einfachen Siloxancyclen in Form von D₄, D₅ und D₆ nach. Das GPC weist eine breite Molmassenverteilung auf, gekennzeichnet durch Mw = 55258 g/ mol; Mn 1693 g/ mol und Mw/ Mn = 32,63.

### Beispiel 2 (erfindungsgemäß)

### Herstellung eines Acetoxy-terminierten, verzweigten Siloxans mit 1,5% Essigsäure-Zusatz

In einem 1000-ml-Vierhalskolben mit KPG-Rührer, Innenthermometer und aufgesetztem Rückflusskühler werden 49,9 g (0,489 mol) Essigsäureanhydrid zusammen mit 268,1 g der in Beispiel 1 hergestellten DT-Zyklen (D/ T-Verhältnis nach ²⁹Si-NMR-Spektrum = 6,18 : 1, M = 525,42 g/ mol und einem Anteil von SiOH/ SiOEt-Gruppierungen von 0,52 Mol-%) und 188,5 g Dekamethylcyclopentasiloxan (D₅) unter Rühren vorgelegt und mit 1,03 g (0,56 ml) Trifluormethansulfonsäure (0,2 Massen-% bezogen auf den Gesamtansatz) und 7,6 g Essigsäure (1,5% bezogen auf die Masse der Reaktanden) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 88,2 % bezogen auf eingesetztes Essigsäureanhydrid sowie das vollständige Verschwinden spektroskopisch erfassbarer Anteile an Si-Alkoxy- und SiOH- Gruppen belegt.

### Überführung des verzweigten Acetoxysiloxans in das entsprechende verzweigte Isopropoxysiloxan zur analytischen Charakterisierung

Unmittelbar nach der Synthese werden 100,0 g dieses trifluormethansulfonsauren, äquilibrierten verzweigten Acetoxysiloxans in einem 250-ml-Vierhalsrundkolben ausgerüstet mit mit KPG-Rührer, Innenthermometer und aufgesetztem Rückflusskühler zusammen mit 23,2 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos, klare Flüssigkeit deren begleitendes ²⁹Si-NMR-Spektrum die quantitative Umwandlung des verzweigten Acetoxysiloxans in ein verzweigtes Isopropoxysiloxan belegt.

Ein Aliquot dieses verzweigten Isopropoxysiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt |
|---|---|---|---|---|
| 2,3 % | 1,4 % | 0,4 % | 4,1 % | 7,1 % |

Unter Berücksichtigung des Isopropanolüberschusses sind hierbei die Gehalte an Siloxancyclen (D₄, D₅ und D₆) allein bezogen auf den Siloxananteil berechnet.

### Beispiel 3 (nichterfindungsgemäß)

### Herstellung eines Acetoxy-terminierten, verzweigten Siloxans

In einem 1000-ml-Vierhalskolben mit KPG-Rührer, Innenthermometer und aufgesetztem Rückflusskühler werden 49,9 g (0,489 mol) Essigsäureanhydrid zusammen mit 268,1 g der in Beispiel 1 hergestellten DT-Zyklen (D/ T-Verhältnis nach ²⁹Si-NMR-Spektrum = 6,18 : 1, M = 525,42 g/ mol und einem Anteil von SiOH/ SiOEt-Gruppierungen von 0,52 Mol-%) und 188,5 g Dekamethylcyclopentasiloxan (D₅) unter Rühren vorgelegt und mit 1,03 g (0,56 ml) Trifluormethansulfonsäure (0,2 Massen-% bezogen auf den Gesamtansatz) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 92,3 % bezogen auf eingesetztes Essigsäureanhydrid sowie das vollständige Verschwinden spektroskopisch erfassbarer Anteile an Si-Alkoxy- und SiOH- Gruppen belegt.

### Überführung des verzweigten Acetoxylsiloxans in das entsprechende verzweigte Isopropoxysiloxan zur analytischen Charakterisierung

Unmittelbar nach der Synthese werden 100,0 g dieses trifluormethansulfonsauren, äquilibrierten verzweigten Acetoxysiloxans in einem 250-ml-Vierhalsrundkolben ausgerüstet mit mit KPG-Rührer, Innenthermometer und aufgesetztem Rückflusskühler zusammen mit 23,2 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos, klare Flüssigkeit deren begleitendes ²⁹Si-NMR-Spektrum die quantitative Umwandlung des verzweigten Acetoxysiloxans in ein verzweigtes Isopropoxysiloxan belegt.

Ein Aliquot dieses verzweigten Isopropoxysiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt |
|---|---|---|---|---|
| 2.03 % | 21,85 % | 0,83 % | 24,71 % | 11,7 % |

Unter Berücksichtigung des Isopropanolüberschusses sind hierbei die Gehalte an Siloxancyclen (D₄, D₅ und D₆) allein bezogen auf den Siloxananteil berechnet.

### Beispiel 4 (erfindungsgemäß)

### Herstellung eines Acetoxy-terminierten, linearen Polydimethylsiloxans mit 1,5% Essigsäure-Zusatz

In einem 1000-ml-Vierhalskolben mit KPG-Rührer, Innenthermometer und aufgesetztem Rückflusskühler werden 77,3 g (0,757 mol) Essigsäureanhydrid zusammen mit 732,8 g (1,98 mol) Dekamethylcyclopentasiloxan (D₅) und 12,2 g Essigsäure (1,5 Gew.-% bezogen auf die Gesamtmasse der Reaktanden) unter Rühren vorgelegt und mit 1,62 g (0,88 ml) Trifluormethansulfonsäure (0,2 Massenprozent bezogen auf den Gesamtansatz) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 93% bezogen auf eingesetztes Essigsäureanhydrid belegt entsprechend einem α,ω-Diacetoxypolydimethylsiloxan mit einer mittleren Gesamtkettenlänge von ca. 14.

### Überführung des α,ω-Diacetoxypolydimethylsiloxans in das entsprechende α,ω-Diisopropoxypolydimethylsiloxan zur analytischen Charakterisierung

Unmittelbar nach der Synthese werden 50,0 g dieses trifluormethansulfonsauren, äquilibrierten α,ω-Diacetoxypolydimethylsiloxans in einem 250-ml-Vierhalsrundkolben ausgerüstet mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos, klare Flüssigkeit deren begleitendes ²⁹Si-NMR-Spektrum die quantitative Umwandlung des α,ω-Diacetoxypolydimethylsiloxans in ein α,ω-Diisopropoxypolydimethylsiloxan belegt.

Ein Aliquot dieses α,ω-Diisopropoxypolydimethylsiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt |
|---|---|---|---|---|
| 4,94 % | 4,04 % | 1,07 % | 10,06 % | 11,00 % |

Unter Berücksichtigung des Isopropanolüberschusses sind hierbei die Gehalte an Siloxancyclen (D₄, D₅ und D₆) allein bezogen auf den Siloxananteil berechnet.

### Beispiel 5 (erfindungsgemäß)

### Herstellung eines Acetoxy-terminierten, linearen Polydimethylsiloxans mit 3,0% Essigsäure-Zusatz

In einem 1000-ml-Vierhalskolben mit KPG-Rührer, Innenthermometer und aufgesetztem Rückflusskühler werden 77,3 g (0,757 mol) Essigsäureanhydrid zusammen mit 732,8 g (1,98 mol) Dekamethylcyclopentasiloxan (D₅) und 24,3 g Essigsäure (3,0 Gew.-% bezogen auf die Gesamtmasse der Reaktanden) unter Rühren vorgelegt und mit 1,62 g (0,88 ml) Trifluormethansulfonsäure (0,2 Massenprozent bezogen auf den Gesamtansatz) versetzt und zügig auf 150°C erhitzt. Die zu Beginn leicht trübe Reaktionsmischung wird unter weiterem Rühren für 4 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 93% bezogen auf eingesetztes Essigsäureanhydrid belegt entsprechend einem α,ω-Diacetoxypolydimethylsiloxan mit einer mittleren Gesamtkettenlänge von ca. 14.

### Überführung des α,ω-Diacetoxypolydimethylsiloxans in das entsprechende α,ω-Diisopropoxypolydimethylsiloxan zur analytischen Charakterisierung

Unmittelbar nach der Synthese werden 50,0 g dieses trifluormethansulfonsauren, äquilibrierten α,ω-Diacetoxypolydimethylsiloxans in einem 250-ml-Vierhalsrundkolben ausgerüstet mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos, klare Flüssigkeit deren begleitendes ²⁹Si-NMR-Spektrum die quantitative Umwandlung des α,ω-Diacetoxypolydimethylsiloxans in ein α,ω-Diisopropoxypolydimethylsiloxan belegt.

Ein Aliquot dieses α,ω-Diisopropoxypolydimethylsiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt |
|---|---|---|---|---|
| 4,09 % | 2,62 % | 0,86 % | 7,57 % | 4,60 % |

Unter Berücksichtigung des Isopropanolüberschusses sind hierbei die Gehalte an Siloxancyclen (D₄, D₅ und D₆) allein bezogen auf den Siloxananteil berechnet.

### Beispiel 6 (nichterfindungsgemäß)

### Herstellung eines Acetoxy-terminierten, linearen Polydimethylsiloxans

In einem 1000-ml-Vierhalskolben mit KPG-Rührer, Innenthermometer und aufgesetztem Rückflusskühler werden 77,3 g (0,757 mol) Essigsäureanhydrid zusammen mit 732,8 g (1,98 mol) Dekamethylcyclopentasiloxan (D₅) unter Rühren vorgelegt und mit 1,62 g (0,88 ml) Trifluormethansulfonsäure (0,2 Massenprozent bezogen auf den Gesamtansatz) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 90% bezogen auf eingesetztes Essigsäureanhydrid belegt entsprechend einem α,ω-Diacetoxypolydimethylsiloxan mit einer mittleren Gesamtkettenlänge von ca. 14.

### Überführung des α,ω-Diacetoxypolydimethylsiloxans das entsprechende α,ω-Diisopropoxypolydimethylsiloxan zur analytischen Charakterisierung

Unmittelbar nach der Synthese werden 50 g dieses trifluormethansulfonsauren, äquilibrierten α,ω-Diacetoxypolydimethylsiloxans werden in einem 250-ml-Vierhalsrundkolben ausgerüstet mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos, klare Flüssigkeit deren begleitendes ²⁹Si-NMR-Spektrum die quantitative Umwandlung des α,ω-Diacetoxypolydimethylsiloxans in ein α,ω-Diisopropoxypolydimethylsiloxan belegt.

Ein Aliquot dieses α,ω-Diisopropoxypolydimethylsiloxans wird entnommen und gaschromatographisch analysiert. Das Gaschromatogramm weist folgende Gehalte auf:

| D₄ | D₅ | D₆ | Summe (D₄ - D₆) | Isopropanolgehalt |
|---|---|---|---|---|
| 1,72 % | 39,12 % | 0,88 | 41,72 | 9,50 |

Unter Berücksichtigung des Isopropanolüberschusses sind hierbei die Gehalte an Siloxancyclen (D₄, D₅ und D₆) allein bezogen auf den Siloxananteil berechnet.

## Patentansprüche

1. Verfahren zur Herstellung supersaurer, insbesondere trifluormethansulfonsaurer, endäquilibrierter Acetoxygruppen-tragender Siloxane, **dadurch gekennzeichnet,**
**dass** man zyklische Siloxane, insbesondere umfassend D₄ und/oder D₅, und/oder Mischungen zyklisch-verzweigter Siloxane vom D/T-Typ, gegebenenfalls in Abmischung mit Hydroxygruppen tragenden Siloxanen und/oder Acetoxy- und/oder Alkoxygruppen-tragenden Silanen und/oder Siloxanen,
unter Einsatz von Supersäure, insbesondere Trifluormethansulfonsäure als Katalysator
mit Acetanhydrid und unter Zusatz von Essigsäure umsetzt,
wobei es sich bei den zyklischen-verzweigten Siloxanen vom D/T-Typ um Mischungen zyklischer-verzweigter Siloxane vom D/T-Typ handelt, die neben D- und T-Einheiten aufweisenden Siloxanen ggf. auch Siloxane mit Q-Einheiten enthalten, mit der Maßgabe, dass bei diesen Mischungen der Anteil an Si-Atomen stammend aus Q-Einheiten ≤ 10 Massen-% bis ≥ 0 Massenprozent-%, bevorzugt ≤ 5 Massen-% bis ≥ 0 Massenprozent-%, bezogen auf die Gesamtheit aller Si-Atome ausmacht,
mit der Maßgabe, dass für den Fall, dass keine Mischungen zyklischer-verzweigter Siloxane vom D/T-Typ eingesetzt werden, die Siloxane mit Q-Einheiten enthalten, die eingesetzte Säuren nicht allein Trifluormethansulfonsäure und Essigsäure sind.

2. Verfahren nach Anspruch 1, **dadurch gekennzeichnet, dass** die neben der Essigsäure eingesetzte Säuren Supersäuren sind, die einen pKa-Wert kleiner -3,0 aufweisen, vorzugsweise fluorierte und/ oder perfluorierte Sulfonsäuren, Fluorsulfonsäure HSO₃F, Fluor-Antimonsäure HSbF₆, Perfluorbutansulfonsäure C₄F₉SO₃H und ganz besonders bevorzugt Trifluormethansulfonsäure CF₃SO₃H.

3. Verfahren nach Anspruch 1 oder 2, **dadurch gekennzeichnet, dass** als Acetoxygruppen tragende Silane Diacetoxydimethylsilan und/ oder Triacetoxymethylsilan eingesetzt werden.

4. Verfahren nach Anspruch 1 bis 3, **dadurch gekennzeichnet, dass** als Alkoxygruppen tragende Silane, Triethoxy- und/ oder Trimethoxy- und/ oder Diethoxysilan eingesetzt werden.

5. Verfahren nach Anspruch 1 bis 4, **dadurch gekennzeichnet, dass** man Essigsäure in Mengen von 0,4 bis 3,5 Gewichtsprozent, vorzugsweise 0,5 bis 3 Gewichtsprozent, bevorzugt 0,8 bis 1,8 Gewichtsprozent, besonders bevorzugt in Mengen von 1,0 bis 1,5 Gewichtsprozent bezogen auf die Reaktionsmatrix
umfassend Acetanhydrid und zyklische Siloxane, umfassend D₄ und/oder D₅,
beziehungsweise umfassend Acetanhydrid, und Mischungen zyklisch-verzweigter Siloxanen vom D/T-Typ,
beziehungsweise umfassend zyklische Siloxane, umfassend D₄ und/oder D₅, und Mischungen zyklisch-verzweigter Siloxanen vom D/T-Typ hinzufügt.

6. Verfahren nach einem der Ansprüche 1 bis 5, **dadurch gekennzeichnet dass** Mischungen zyklischer-verzweigter Siloxane vom D/T-Typ, die aus D- und T-Einheiten aufweisenden Siloxanen bestehen und deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, ≤ 2 Molprozent, bevorzugt kleiner 1 Molprozent ist, und die bevorzugt zumindest 5 Gewichtsprozent Siloxancyclen, wie vorzugsweise Oktamethylcyclotetrasiloxan (D₄), Dekamethylcyclopentasiloxan (D₅) und/oder deren Mischungen enthalten, eingesetzt werden.

7. Verfahren nach einem der Ansprüche 1 bis 5, **dadurch gekennzeichnet, dass** Mischungen zyklischer-verzweigter, D- und T-Einheiten aufweisender Siloxane deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind, eingesetzt werden.

8. Verfahren nach einem der Ansprüche 1 bis 7, **dadurch gekennzeichnet, dass** man neben der Essigsäure noch Säure, vorzugsweise Supersäure, insbesondere Trifluormethansulfonsäure in Mengen von 0,1 bis 1,0 Massenprozent, bevorzugt 0,1 bis 0,3 Massenprozent, bezogen auf die Acetanhydrid und zyklische Siloxane, insbesondere umfassend D₄ und/oder D₅,
und/oder Mischungen zyklisch-verzweigter Siloxane vom D/T-Typ umfassende Reaktionsmatrix, einsetzt.

9. Verfahren nach Anspruch 1 bis 8, **dadurch gekennzeichnet, dass** man die Umsetzung im Temperaturbereich von 140 bis 160°C und in einem Zeitraum von 4 bis 8 Stunden durchführt.

10. Verfahren nach einem der Ansprüche 1 bis 9, ausgenommen den alleinigen Einsatz von Trifluormethansulfonsäure und Essigsäure als Säuren.

11. Supersaure, insbesondere trifluormethansulfonsaure, endäquilibrierte lineare α,ω-Acetoxygruppen-tragende Siloxane hergestellt nach einem Verfahren nach einem der vorigen Ansprüche 1 bis 10, **dadurch gekennzeichnet, dass** sie Gesamtcyclengehalte, definiert als Summe der Gehaltsanteile der zyklischen Siloxane umfassend D₄, D₅ und D₆ bezogen auf die Siloxanmatrix und gaschromatographisch ermittelt nach deren Derivatisierung zu den entsprechenden linearen α,ω-Isopropoxysiloxanen von kleiner 13, vorzugsweise kleiner 12 Gewichtsprozent aufweisen.

12. Supersauere, insbesondere trifluormethansulfonsaure, endäquilibrierte verzweigte Acetoxygruppen-tragende Siloxane hergestellt nach einem Verfahren nach einem der Ansprüche 1 bis 10, **dadurch gekennzeichnet, dass** sie Gesamtcyclengehalte, definiert als Summe der Gehaltsanteile der zyklischen Siloxane umfassend D₄, D₅ und D₆ bezogen auf die Siloxanmatrix und gaschromatographisch ermittelt nach deren Derivatisierung zu den entsprechenden verzweigten Isopropoxysiloxanen von kleiner 8, vorzugsweise kleiner 7 Gewichtsprozent aufweisen.

13. Verwendung der endäquilibrierten supersauren, insbesondere trifluormethansufonsauren Acetoxygruppen-tragenden Siloxane nach Anspruch 11 oder Anspruch 12 als Ausgangsmaterialien für die Herstellung von SiOC-verknüpften Polyethersiloxanen für deren Einsatz in PU-Schaumstabilisatoren, in Entschäumern, in Dismulgatoren, in Emulgatoren und in Lack- und Verlaufsadditiven; sowie für deren Einsatz als Entlüfter; als Schaumstabilisator, insbesondere als Polyurethanschaumstabilisator; als Netzmittel; als Hydrophobierungsmittel; als Verlaufsmittel; zur Herstellung von Polymerdispersionen; zur Herstellung von Klebstoffen oder Dichtstoffen; zur Oberflächenbehandlung von Fasern, Partikeln oder Flächengebilden, insbesondere zur Ausrüstung oder Imprägnierung von Textilien, zur Herstellung von Papiertüchern, bei der Beschichtung von Füllstoffen; zur Herstellung von Reinigungs- und Pflegeformulierungen für den Haushalt oder für industrielle Anwendungen, insbesondere zur Herstellung von Weichspülmitteln; zur Herstellung von kosmetischen, pharmazeutischen und dermatologischen Zusammensetzungen, insbesondere kosmetischen Reinigungs- und Pflegeformulierungen, Haarbehandlungsmitteln und Haarnachbehandlungsmitteln; zur Reinigung und Pflege von harten Oberflächen; als Prozesshilfsmittel bei der Extrusion von Thermoplasten; zur Herstellung von thermoplastischen Formkörpern und/oder als Adjuvant im Pflanzenschutz; zur Herstellung von Baustoffzusammensetzungen.

## Claims

1. Process for producing superacidic, in particular trifluoromethanesulfonic acid-acidified, end-equilibrated, acetoxy-bearing siloxanes, **characterized in that** it comprises
reacting cyclic siloxanes, in particular comprising D₄ and/ or D₅,
and/or mixtures of cyclic branched siloxanes of the D/T type,
optionally in admixture with hydroxyl-bearing siloxanes and/or acetoxy- and/or alkoxy-bearing silanes and/or siloxanes,
with acetic anhydride using superacid, in particular trifluoromethanesulfonic acid, as catalyst and with addition of acetic acid,
wherein the cyclic branched siloxanes of the D/T type are mixtures of cyclic branched siloxanes of the D/T type which contain not only siloxanes comprising D and T units but optionally also siloxanes comprising Q units with the proviso that in these mixtures the proportion of Si atoms derived from Q units is ≤ 10% by mass to ≥ 0% by mass, preferably ≤ 5% by mass to ≥ 0% by mass, based on the entirety of all Si atoms,
with the proviso that, if no mixtures of cyclic branched siloxanes of the D/T type which contain siloxanes comprising Q units are employed, the acids employed are not solely trifluoromethanesulfonic acid and acetic acid.

2. Process according to Claim 1, **characterized in that** the acids employed in addition to acetic acid are superacids having a pKₐ of less than -3.0, preferably fluorinated and/or perfluorinated sulfonic acids, fluorosulfonic acid HSO₃F, fluoroantimonic acid HSbF₆, perfluorobutanesulfonic acid C₄F₉SO₃H and very particularly preferably trifluoromethanesulfonic acid CF₃SO₃H.

3. Process according to Claim 1 or 2, **characterized in that** diacetoxydimethylsilane and/or triacetoxymethylsilane are employed as acetoxy-bearing silanes.

4. Process according to Claim 1 to 3, **characterized in that** triethoxysilane and/or trimethoxysilane and/or diethoxysilane are employed as alkoxy-bearing silanes.

5. Process according to Claim 1 to 4, **characterized in that** it comprises adding acetic acid in amounts of 0.4 to 3.5 per cent by weight, by preference 0.5 to 3 per cent by weight, preferably 0.8 to 1.8 per cent by weight, particularly preferably in amounts of 1.0 to 1.5 per cent by weight, based on the reaction matrix
comprising acetic anhydride and cyclic siloxanes comprising D₄ and/or D₅ ,
or comprising acetic anhydride and mixtures of cyclic branched siloxanes of the D/T type,
or comprising cyclic siloxanes comprising D₄ and/or D₅ and mixtures of cyclic branched siloxanes of the D/T type.

6. Process according to any of Claims 1 to 5, **characterized in that** mixtures of cyclic branched siloxanes of the D/T type which consist of siloxanes comprising D and T units and whose ²⁹Si NMR spectroscopy-determinable cumulative proportion of D and T units comprising Si-alkoxy and/or SiOH groups present in the siloxane matrix is ≤ 2 mole per cent, preferably less than 1 mole per cent, and which preferably contain at least 5 per cent by weight of siloxane cycles, such as preferably octamethylcyclotetrasiloxane (D₄), decamethylcyclopentasiloxane (D₅) and/or mixtures thereof, are employed.

7. Process according to any of Claims 1 to 5, **characterized in that** mixtures of cyclic branched siloxanes comprising D and T units whose ²⁹Si NMR spectroscopy-determinable cumulative proportion of D and T units comprising Si-alkoxy and/or SiOH groups present in the siloxane matrix is greater than 2 and less than 10 mole per cent are employed.

8. Process according to any of Claims 1 to 7, **characterized in that**, in addition to the acetic acid, acid, preferably superacid, in particular trifluoromethanesulfonic acid is employed in amounts of 0.1 to 1.0 per cent by mass, preferably 0.1 to 0.3 per cent by mass, based on the reaction matrix comprising acetic anhydride and cyclic siloxanes, in particular comprising D₄ and/or D₅,
and/or mixtures of cyclic branched siloxanes of the D/T type.

9. Process according to Claim 1 to 8, **characterized in that** the reaction is carried out in a temperature range of 140°C to 160°C and over a duration of 4 to 8 hours.

10. Process according to any of Claims 1 to 9, excluding the sole use of trifluoromethanesulfonic acid and acetic acid as acids.

11. Superacidic, in particular trifluoromethanesulfonic acid-acidified, end-equilibrated linear α,ω-acetoxy-bearing siloxanes produced by a process according to any of the preceding Claims 1 to 10, **characterized in that** they have total cycles contents defined as the sum of the content fractions of the cyclic siloxanes comprising D₄, D₅ and D₆ based on the siloxane matrix and determined by gas chromatography after their derivatization to afford the corresponding linear α,ω-isopropoxysiloxanes of less than 13, preferably less than 12, per cent by weight.

12. Superacidic, in particular trifluoromethanesulfonic acid-acidified, end-equilibrated branched acetoxy-bearing siloxanes produced by a process according to any of Claims 1 to 10, **characterized in that** they have total cycles contents defined as the sum of the content fractions of the cyclic siloxanes comprising D₄, D₅ and D₆ based on the siloxane matrix and determined by gas chromatography after their derivatization to afford the corresponding branched isopropoxysiloxanes of less than 8, preferably less than 7, per cent by weight.

13. Use of the end-equilibrated superacidic, in particular trifluoromethanesulfonic acid-acidified acetoxy-bearing siloxanes according to Claim 11 or Claim 12 as starting materials for the production of SiOC-bonded polyether siloxanes for use thereof in PU foam stabilizers, in defoamers, in demulsifiers, in emulsifiers and in paint and flow control additives; and also for use thereof as deaerators; as foam stabilizer, in particular as polyurethane foam stabilizer; as wetting agents; as hydrophobizing agents; as flow control agents; for producing polymer dispersions; for production of adhesives or sealants; for surface treatment of fibers, particles or textile fabrics, in particular for treatment or impregnation of textiles, for production of paper towels, in the coating of fillers; for production of cleaning and care formulations for household use or for industrial applications, in particular for production of fabric softeners; for production of cosmetic, pharmaceutical and dermatological compositions, in particular cosmetic cleaning and care formulations, hair treatment agents and hair aftertreatment agents; for cleaning and care of hard surfaces; as processing aids in the extrusion of thermoplastics; for producing thermoplastic molded articles and/or as an adjuvant in plant protection; for production of building material compositions.

## Revendications

1. Procédé de préparation de siloxanes superacides, en particulier acide trifluorométhanesulfonique, complètement équilibrés, portant des groupes acétoxy, **caractérisé**
**en ce qu'**on transforme des siloxanes cycliques, comprenant en particulier D₄ et/ou D₅, et/ou des mélanges de siloxanes cycliques-ramifiés du type D/T, le cas échéant en mélange avec des siloxanes portant des groupes hydroxy et/ou des silanes et/ou des siloxanes portant des groupes acétoxy et/ou alcoxy,
avec utilisation d'un superacide, en particulier l'acide trifluorométhanesulfonique, comme catalyseur}
avec de l'anhydride acétique et avec utilisation d'acide acétique,
les siloxanes cycliques-ramifiés du type D/T étant des mélanges de siloxanes cycliques-ramifiés du type D/T qui contiennent, outre des siloxanes présentant des motifs D et T, le cas échéant également des siloxanes présentant des motifs Q, étant entendu que dans ces mélanges la proportion d'atomes de Si provenant des motifs Q représente ≤ 10% en masse à ≥ 0% en masse, de préférence ≤ 5% en masse à ≥ 0% en masse, par rapport à la totalité de tous les atomes de Si,
étant entendu que dans le cas où on n'utilise pas de mélanges de siloxanes cycliques-ramifiés du type D/T, qui contiennent des siloxanes présentant des motifs Q, les acides utilisés ne sont pas uniquement l'acide trifluorométhanesulfonique et l'acide acétique.

2. Procédé selon la revendication 1, **caractérisé en ce que** les acides utilisés en plus de l'acide acétique sont des superacides qui présentent une valeur pKa inférieure à -3,0, de préférence des acides sulfoniques fluorés et/ou perfluorés, l'acide fluorosulfonique HSO₃F, l'acide fluoroantimonique HSbF₆, l'acide perfluorobutanesulfonique C₄F₉SO₃H et de manière tout particulièrement préférée l'acide trifluorométhanesulfonique CF₃SO₃H.

3. Procédé selon la revendication 1 ou 2, **caractérisé en ce qu'**on utilise, comme silanes portant des groupes acétoxy, du diacétoxydiméthylsilane et/ou du triacétoxyméthylsilane.

4. Procédé selon la revendication 1 à 3, **caractérisé en ce qu'**on utilise, comme silanes portant des groupes alcoxy, du triéthoxysilane et/ou du triméthoxysilane et/ou du diéthoxysilane.

5. Procédé selon la revendication 1 à 4, **caractérisé en ce qu'**on ajoute de l'acide acétique en des quantités de 0,4 à 3,5% en poids, de préférence de 0,5 à 3% en poids, de préférence de 0,8 à 1,8% en poids, de manière particulièrement préférée en des quantités de 1,0 à 1,5% en poids, par rapport à la matrice de réaction
comprenant de l'anhydride acétique et des siloxanes cycliques comprenant D₄ et/ou D₅,
ou, selon le cas, comprenant de l'anhydride acétique et des mélanges de siloxanes cycliques-ramifiés du type D/T, ou, selon le cas, comprenant des siloxanes cycliques, comprenant D₄ et/ou D₅, et des mélanges de siloxanes cycliques-ramifiés du type D/T.

6. Procédé selon l'une des revendications 1 à 5, **caractérisé en ce qu'**on utilise des mélanges de siloxanes cycliques-ramifiés du type D/T qui sont constitués par des siloxanes présentant des motifs D et T et dont la proportion sous forme de somme, pouvant être déterminée par spectroscopie ²⁹Si-RMN, des motifs D et T présents dans la matrice de siloxane, qui présentent des groupes Si-alcoxy et/ou SiOH, est ≤ 2% en mole, de préférence inférieure à 1% en mole et qui contiennent de préférence au moins 5% en poids de cycles siloxane, tels que de préférence l'octaméthylcyclotétrasiloxane (D₄), le décaméthylcyclopentasiloxane (D₅) et/ou leurs mélanges.

7. Procédé selon l'une des revendications 1 à 5, **caractérisé en ce qu'**on utilise des mélanges de siloxanes cycliques-ramifiés, présentant des motifs D et T, dont la proportion sous forme de somme, pouvant être déterminée par spectroscopie ²⁹Si-RMN, des motifs D et T présents dans la matrice de siloxane, qui présentent des groupes Si-alcoxy et/ou SiOH, est supérieure à 2 et inférieure à 10% en mole.

8. Procédé selon l'une des revendications 1 à 7, **caractérisé en ce qu'**on utilise, outre l'acide acétique, encore des acides, de préférence des superacides, en particulier l'acide trifluorométhanesulfonique en des quantités de 0,1 à 1,0% en masse, de préférence de 0,1 à 0,3% en masse, par rapport à la matrice de réaction comprenant de l'anhydride acétique et des siloxanes cycliques, comprenant en particulier D₄ et/ou D₅,
et/ou des mélanges de siloxanes cycliques-ramifiés du type D/T.

9. Procédé selon la revendication 1 à 8, **caractérisé en ce qu'**on effectue la transformation dans la plage de température de 140 à 160°C en une période de 4 à 8 heures.

10. Procédé selon l'une des revendications 1 à 9, à l'exception de l'utilisation unique d'acide trifluorométhanesulfonique et d'acide acétique comme acides.

11. Siloxanes superacides, en particulier acide trifluorométhanesulfonique, complètement équilibrés, linéaires, portant des groupes α,ω-acétoxy, préparés selon un procédé selon l'une des revendications précédentes 1 à 10, **caractérisés en ce qu'**ils présentent des teneurs totales en cycles, définies comme la somme des proportions des siloxanes cycliques comprenant D₄, D₅ et D₆, par rapport à la matrice de siloxane et déterminées par chromatographie en phase gazeuse après leur dérivation en α,ω-isopropoxysiloxanes linéaires correspondants, inférieures à 13, de préférence inférieures à 12% en poids.

12. Siloxanes superacides, en particulier acide trifluorométhanesulfonique, complètement équilibrés, ramifiés, portant des groupes acétoxy, préparés selon un procédé selon l'une des revendications précédentes 1 à 10, **caractérisés en ce qu'**ils présentent des teneurs totales en cycles, définies comme la somme des proportions des siloxanes cycliques comprenant D₄, D₅ et D₆, par rapport à la matrice de siloxane et déterminées par chromatographie en phase gazeuse après leur dérivation en isopropoxysiloxanes ramifiés correspondants, inférieures à 8, de préférence inférieures à 7% en poids.

13. Utilisation des siloxanes complètement équilibrés, superacides, en particulier acide trifluorométhanesulfonique, portant des groupes acétoxy selon la revendication 11 ou 12 comme matériaux de départ pour la préparation de polyéthersiloxanes liés par SiOC en vue de leur utilisation dans des stabilisants de mousse PU, dans des antimousses, dans des désémulsifiants, dans des émulsifiants et dans des additifs pour laque et d'étalement ; ainsi qu'en vue de leur utilisation comme agent de désaération ; comme stabilisant de mousse, en particulier comme stabilisant de mousse de polyuréthane ; comme agent mouillant ; comme agent rendant hydrophobe ; comme agent d'étalement ; pour la préparation de dispersions polymères ; pour la préparation d'adhésifs ou de matériaux d'étanchéité ; pour le traitement de surface de fibres, de particules ou de structures planes, en particulier pour l'apprêt ou l'imprégnation de textiles, pour la fabrication de mouchoirs en papier, lors du revêtement de charges ; pour la préparation de formulations de nettoyage et de soin pour le ménage ou pour des applications industrielles, en particulier pour la préparation d'adoucissants ; pour la préparation de compositions cosmétiques, pharmaceutiques et dermatologiques, en particulier des formulations cosmétiques de nettoyage et de soin, des agents de traitement des cheveux et des agents de conditionnement des cheveux ; pour le nettoyage et l'entretien de surfaces dures ; comme adjuvant de procédé lors de l'extrusion de thermoplastiques ; pour la fabrication de corps façonnés thermoplastiques et/ou comme adjuvant dans la phytoprotection ; pour la préparation de compositions de matériau de construction.
